# EUROPEAN PATENT SPECIFICATION

(11) **EP 1 160 465 B1**
(45) Date of publication and mention of the grant of the patent: **12.10.2005**
(21) Application number: 01112695.0
(22) Date of filing: 25.05.2001
(51) Int. Cl.: F16B 17/00, F16B 7/04

(54) **Mechanical joint and method for forming same**
Mechanische Verbindung und Verfahren zu ihrer Herstellung
Liaison mécanique et méthode pour sa formation

(30) Priority: 25.05.2000 GB 0012653
(43) Date of publication of application: 05.12.2001
(73) Proprietor: Johnson, Mark Nicholas, North Yorkshire YO61 2HB (GB)
(72) Inventor: Johnson, Mark Nicholas, North Yorkshire YO61 2HB (GB)
(74) Representative: Wood, Graham

(56) References cited:
- EP-A- 0 095 336
- CH-A- 689 838
- US-A- 1 288 706
- US-A- 2 760 799
- US-A- 4 440 519
- US-A- 6 035 516

## Description

The invention to which this application relates is a mechanical joint which can be used in many possible areas such as, for example, in construction of furniture, exhibition stands, staging and the like.

Conventionally, when an item such as an item of furniture or staging is constructed, at various intervals such as at the corners of the item a series of members are joined together typically by welding. For example, the ends of an end member and side member are abutted against a leg member and welded thereto to form part of the frame construction. In other instances, the leg member can be provided with slots or other engagement means to allow matching engagement means in the end and side members to be engaged therewith but again, typically, some form of welding or other attachment is also provided to ensure that the members stay in the correct position. The use of welding to join the members together means that once the item has been formed, finishing operations are required to reduce the visible impact of the joint and smooth the surfaces of the same. However, it is still commonly the case that the attachment technique used is clearly visible and this can detract from the aesthetic appearance of the article and, furthermore, can also restrict the form and construction of the articles.

Known mechanical joints include those shown in CH689838, US-A-2760799, EP-A-0095336 and US-A-1288706. In CH689838 a joint is formed by first deforming or squashing substantially flat a portion of a first member. This causes an opening to be formed for a second member location. The deformation causes an interruption in the lines of the first member which is not pleasing to the eye. US-2760799 discloses the joining of two members but both members remain in the same plane before and after being joined together. EP-0095336 requires the addition of a joining stub to join two members together and US-1288706 provides a bail particularly for carpet cleaners.

The aim of the present invention is to provide a mechanical joint which can be used without the need for visible attachment means thereby improving the aesthetic appearance of the articles formed using this type of joint.

In a first aspect of the invention there is provided a mechanical joint for use in the construction of an article, said joint comprising a first member and a second member, said first member comprising first and second portions and being provided with at least one opening therebetween defined by first and second edges, said opening receiving the second member, or an insert capable of receiving the second member , the first and/or second edges of the opening having been moved to engage the second member or insert within the opening and said opening resulting from a removal of material from the first member to leave a band of material at the opening location, characterised in that the first member is provided in an initial condition in a substantially straight elongate form and the movement of the first and second edges of the opening is about a pivotal axis located at the opening or adjacent thereto so that the first member, when the joint is formed, has relatively angled first and second portions depending from the joint.

In one embodiment the first member is provided with one or more portions and/or openings formed at spaced intervals and each of said further portions and/or openings is provided for the formation of a mechanical joint in accordance with the invention.

Typically the second member lies in a plane substantially perpendicular to the plane of the longitudinal axis of the first member.

In one embodiment, the opening extends from one side of the member across the majority of the member to the opposite side leaving the band of material at the opposite side.

The said first member can include engagement means at intervals, or along the length thereof, to allow the engagement of a further component such as, for example, a table top, decking or the like.

In a further aspect of the invention there is provided a method of forming a mechanical joint, said method comprising taking a first substantially straight elongate member comprising first and second portions, forming an opening therebetween depending from one side of said member, and defined by first and second edges positioning a second member, insert or former in the opening and then moving at least one portion of the first member so as to move the first and second edges towards one another to a degree which is sufficient to prevent the insert or second member from passing through the opening and the opening being formed by removing material from one side of the first member so as to leave a band of material at the opening location characterised in that the movement of the first and second edges of the opening is about a pivotal axis located at the opening or adjacent thereto, so that the first member, when the joint is formed, has relatively angled first and second positions depending from the joint.

In one embodiment the first and second edges are respectively moved so as to substantially close the opening and hence retain the member or insert in position. In one arrangement the opening may be completely closed by the provision of a closing member and/or weld material.

In one embodiment an insert is located in the aperture and has upper and/or lower collar formations which protrude above and/or below the first member. In one form the second member positioned in the opening is a former and is capable of being replaced by an insert which can be held in position or alternatively the member is a second member which is attached via the mechanical joint. In an alternative embodiment, the insert is provided in the opening and when the first member is moved, as described, the insert in position so there is no need for a further insert or member to be provided.

If an insert is used, typically it is provided with engagement means to allow the engagement of a second member therewith.

It will therefore be appreciated that a number of these mechanical joints and a number of members can be provided to allow the formation of an item.

If the item which is formed is for example a table or desk or staging or a stand, the sheet material which forms the table top or stage can be formed of a particular shape and at least partially enclosed by at least one member in which the mechanical joints are to be formed. The at least one member is provided with engagement means for the sheet material. In the formation of the item, the mechanical joints can be formed with the sheet material in situ so that the at least one member is formed around the sheet material to take the same shape as the outline of the sheet material.

It should also be appreciated that in some instances, and dependent on the size and form of aperture in the member, the insert or second member which is to be located in the aperture may be of a size or diameter greater than the dimensions of the member in which the aperture is formed so that the mechanical joint has a bulbous form.

In one embodiment the former is removed by sliding the same out of the aperture and replaced by an insert or second member which is positioned to engage in the opening and so engage the first member.

The former can be an insert which is retained in position and to which the second member is connected or the former can be the second member itself which is trapped in position to form the mechanical joint.

Thus, an item of furniture can be formed from at least a first and second member, using the mechanical joint, said item formed by engaging the second member with the first member via a mechanical joint and said mechanical joint is formed with the first member including an opening defined therein for the reception of the second member or means to which the second member can be attached, said edges defining the opening moved to trap the means or second member in the opening and thereby form the item of furniture. In one embodiment the item is formed from a series of selectively engaged members, at least one of said engagements made via a mechanical joint as herein described.

Specific embodiments of the invention will now be described with reference to the accompanying drawings, wherein:-
Figures 1A-H illustrate the method used in the formation of a joint in one embodiment according to the invention;
Figures 2A-B illustrate an embodiment of the joint with a second member attached therewith;
Figures 3A-G illustrate further arrangements of location means for a second member;
Figures 4A-B illustrate one use of a joint arrangement;
Figures 5A-C illustrate embodiments of some articles manufactured using the joint of the current invention.
Figures 6A-C, 7 and 8 illustrate an alternative mechanical joint and
are included as being useful for understanding the use of the mechanical joint in accordance with the invention.

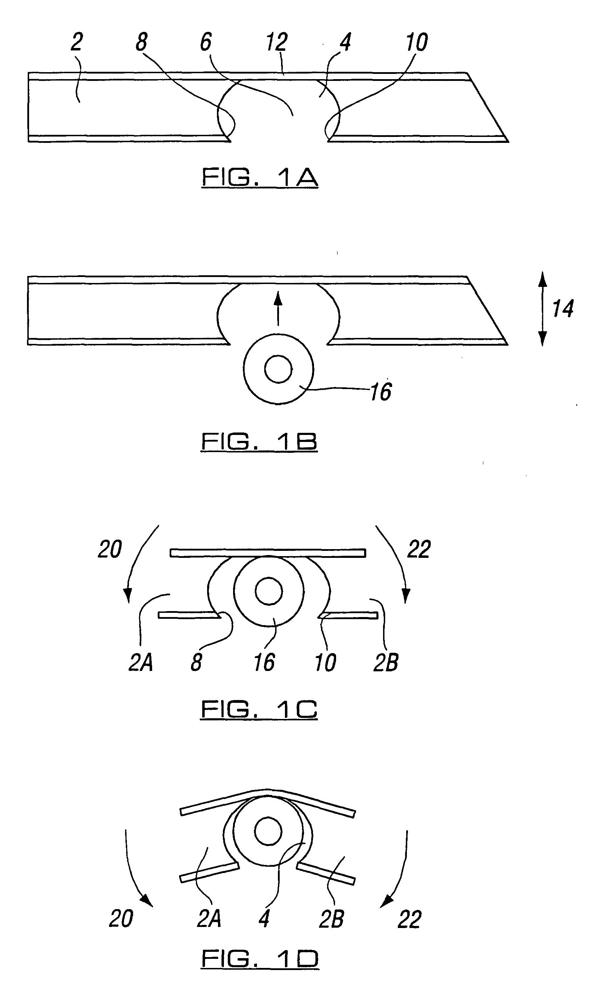

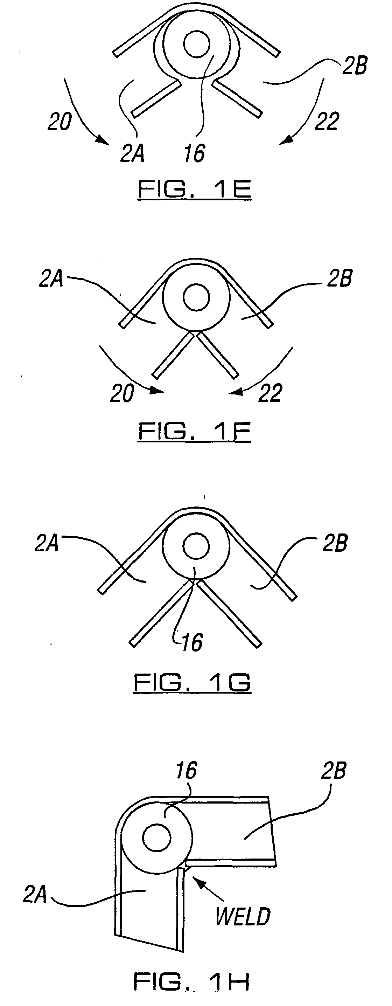

Referring firstly to Figures 1A-H, there is illustrated a method of forming a joint in accordance with the current invention. There is provided in Figure 1A a member 2 which can be tubular and typically of square or rectangular cross-section or may alternatively be of C-section or any appropriate section to suit the particular use. The material used can also be of any particular form and suit particular manufacturing requirements and/or finishing appearances. There is formed in the member 2, which is shown in plan, an aperture 4 which has an opening 6 defined by first and second edges 8, 10. The aperture is formed so as to leave a band 12 of material of the member at the edge opposite the opening as illustrated.

Figure 1B illustrates how an insert as shown, former piece or the second member to be attached thereto, is positioned in the aperture 4. In the embodiment shown the insert has a smaller diameter than the width 14 of the member 2 but it should be appreciated that the diameter of the insert could be greater than the width 14 thereby forming a bulbous joint. With the insert 16 in position as shown in Figure 1C, the edges 8 and 10 are, in effect, wrapped around the insert 16 as is illustrated in Figure 1D by the movement of the portions 2A, 2B of the member 2, illustrated by the arrows 20, 22 respectively. It will be seen with reference to Figures 1D through to G that the continued movement of the members 2A, 2B brings the edges 8 and 10 into a position in which they are adjacent one another and in which the walls of the aperture 4 wrap round and take significantly the same form as the outer surface of the insert 16. It should be noted that in normal instances the shape of the aperture will be such as to allow the formation of the opening when the steps illustrated in Figures 1A-G have been completed substantially matching the outline of the insert 16. Thus the insert 16 can no longer be removed through the opening and the mechanical joint is formed into which a second member, not shown, can be engaged. The insert 16 includes engagement means with which the second member engages. If required, the edges 8 and 10 can be welded together as illustrated in Figure 1H to close the opening although this may not be necessary in all instances and, it will be appreciated that the position of the weld is such that it will not be readily viewable by onlookers to the article formed using joints of this type. It will therefore be appreciated that the joint formed in accordance with this invention does not require large scale welding or joining of components together and therefore the visual appearance of the joint so formed is greatly enhanced in comparison to conventional joints. Furthermore, there is no need to provide finishing operations on the joint to improve the visual appearance of the same as is the case with conventional joints.

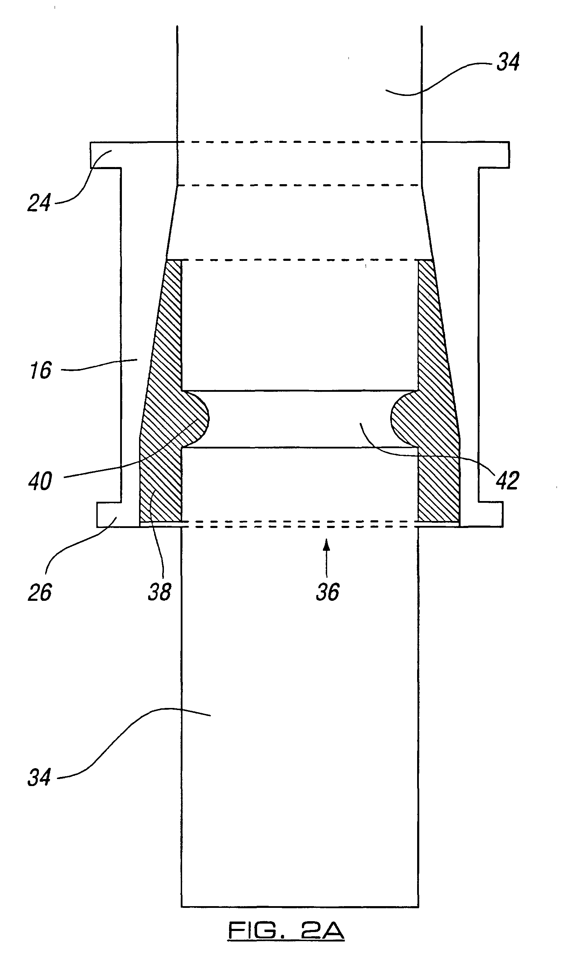

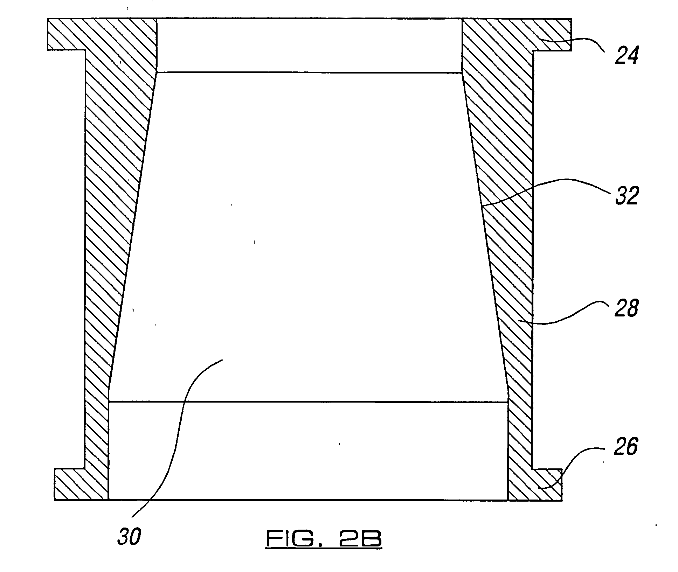

Figures 2A and B illustrate the provision of one embodiment of insert 16 as part of the mechanical joint. The cross sectional view in Figure 2B shows that the insert has upper and lower collars 24, 26 respectively which lie outside of the member 2 and prevent the insert from slipping through the aperture 4, and an outer wall 28 which defines an inner passage 30 which has a frustoconical portion 32. To allow the engagement of a member 34 with the mechanical joint in this embodiment, the insert is positioned in the joint as described with Figures 1A-H and then the second member 34 is introduced into the insert as indicated by arrow 36 along with an engagement formation 38 which sits in the passage 30 of the insert 16. The engagement means 38 has an annular ring 40 which engages in an indented recess 42 in the second member 34 and thereby engages the second member in the insert via the engagement means 38 as shown. Typically, the member can be a leg of a table, a desk, seat, shelving unit, staging or the like and in the embodiment of Figure 2A, the member 34 is engaged with the insert 16 and passes through the joint to form a leg of a shelving system so that the member will be engaged with a number of mechanical joints at spaced intervals there-along, each of the mechanical joints being provided at the location of a shelf.

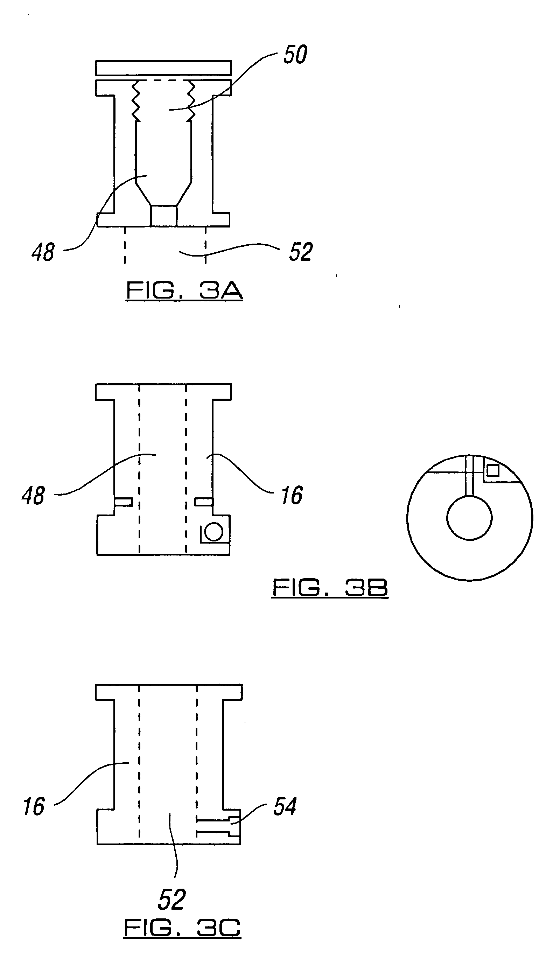

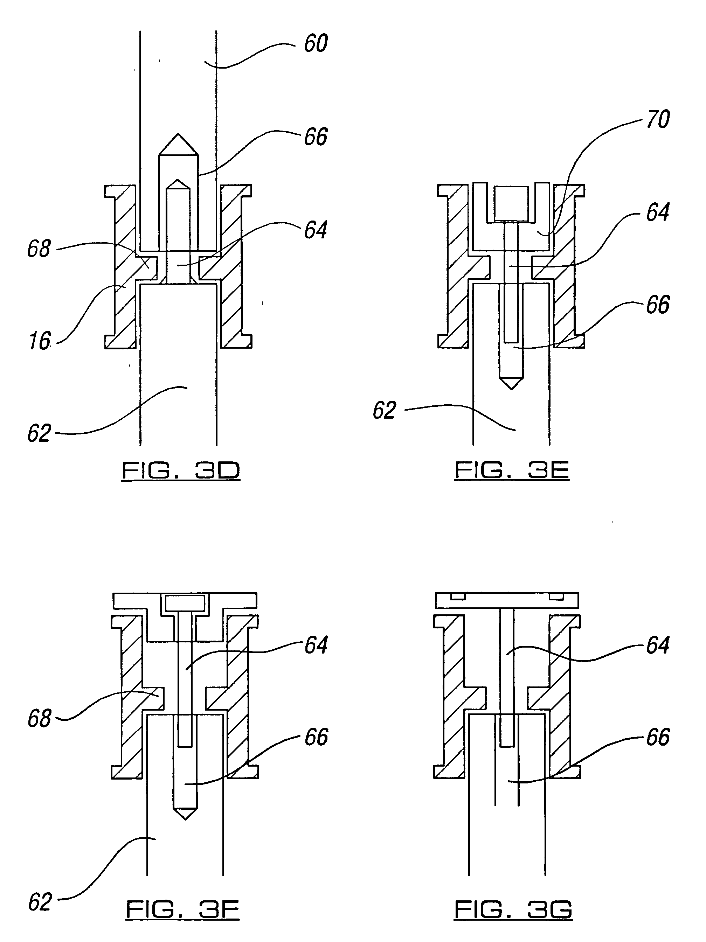

There are a number of different arrangements of inserts which can be used to suit specific requirements and Figures 3A to G illustrate various embodiments. In Figure 3A, the insert is provided with a threaded passage 48 into which a screw or other threaded engagement means 50 can be entered to engage with a member, not shown, but protruding from the base 52 of the insert. Figure 3B illustrates a split collar form of insert with which a member can be engaged by passing into the aperture 48 passing through the insert. Figure 3C utilises the provision of a grub screw 54 which can be used to engage with a second member 52 on the insert 16. Figure 3D illustrates an arrangement whereby the insert 16 is provided to locate two members 60, 62 with respect to the mechanical joint and to each other by use of matching male and female engagement means 64, 66 and collar section 68 as illustrated. Figure 3E illustrates a similar arrangement to Figure 3D with only one member 62 being located and with a capped engagement portion 70 but utilising the male and female engagement means 64, 66 in a similar manner. Figures 3F and G illustrate similar arrangements to that of Figure 3E.

It will be appreciated that a number of mechanical joints will typically be required to allow the formation of an item and it will also be appreciated that there are number of different embodiments of articles which can be formed using the mechanical joint as herein described

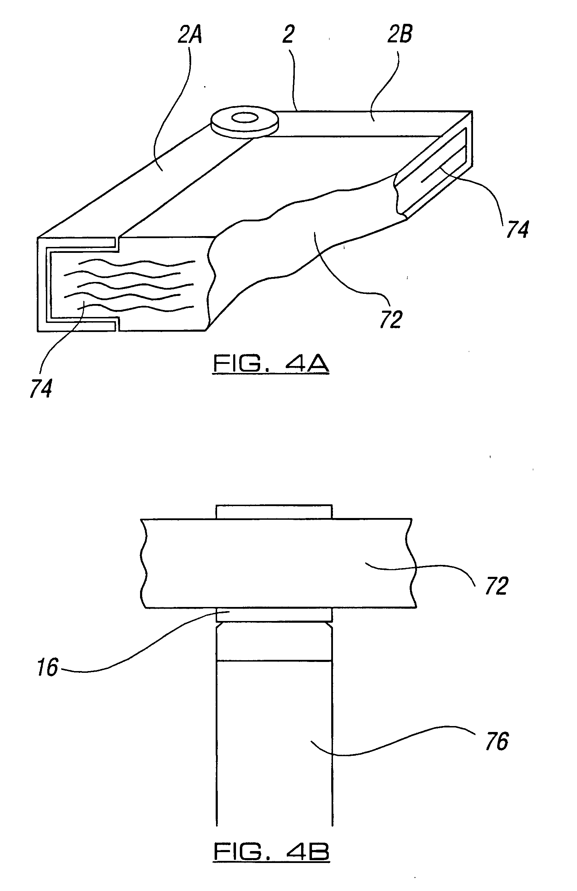

Figures 4A and B illustrate one form wherein a mechanical joint is formed from member 2A, 2B and the member is provided with a C section as illustrated. The mechanical joint in this arrangement is provided to be used to form a table or staging and a portion of the sheet material used to form the table top or stage 72 is illustrated wherein recessed edges 74 are provided which engage in the recess of the C section as illustrated. With the leg 76 engaged in the insert 16 as shown in Figure 4B, it will be appreciated how a number of said mechanical joints at the corners of the item are used to allow attachment of the legs and also, in conjunction with the members 2, allow the engagement of the sheet material 72 and so form the item.

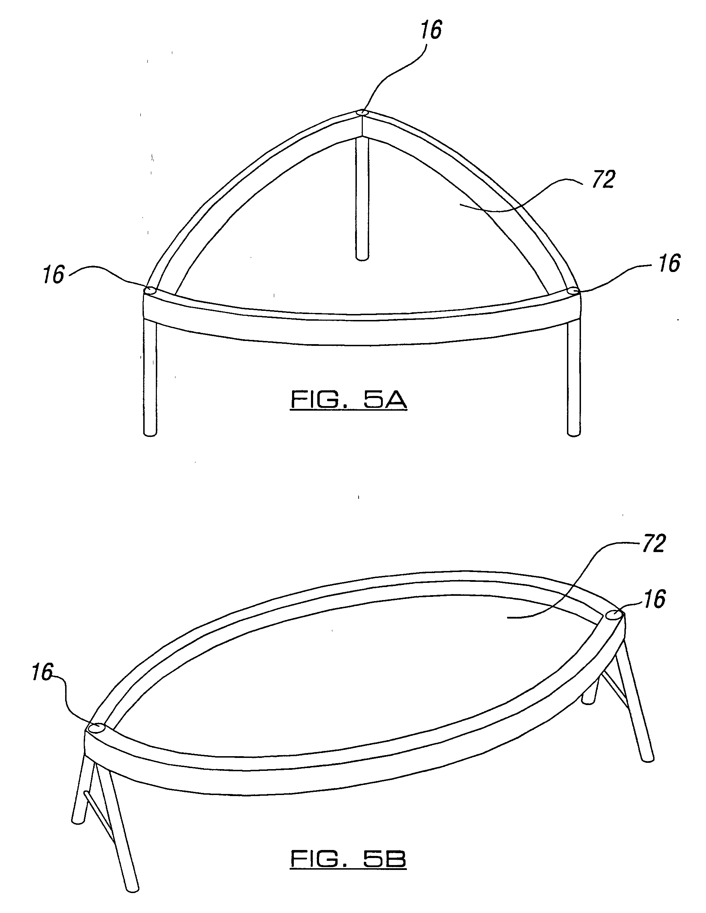

Figures 5A to C illustrate alternative arrangements using mechanical joints, and Figures 5A and B illustrate how relatively unusually shaped items of furniture can be formed. Indeed, in the Figures 5A and B it is possible that the table top 72 can be provided in grooves along the inner sides of the member 2 and the member 2 formed around the shape of the table top with the joints formed at the same time as the member is shaped. Figure 5C illustrates a more conventionally shaped table and illustrates how the table top is provided to be fitted into a frame formed with mechanical joints in accordance with the invention.

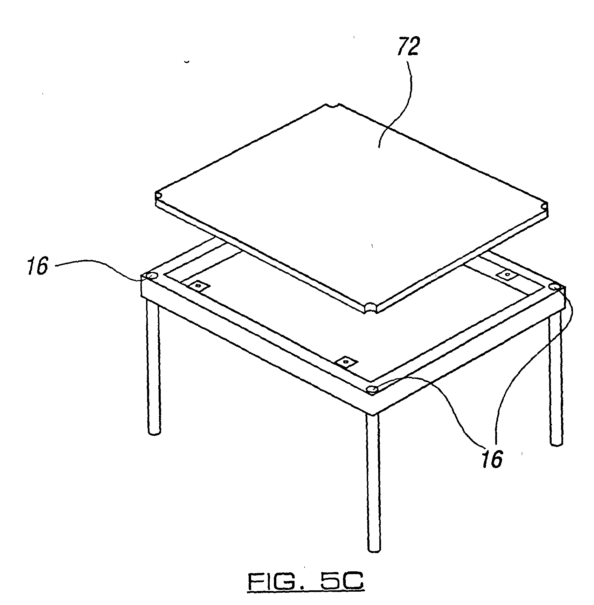

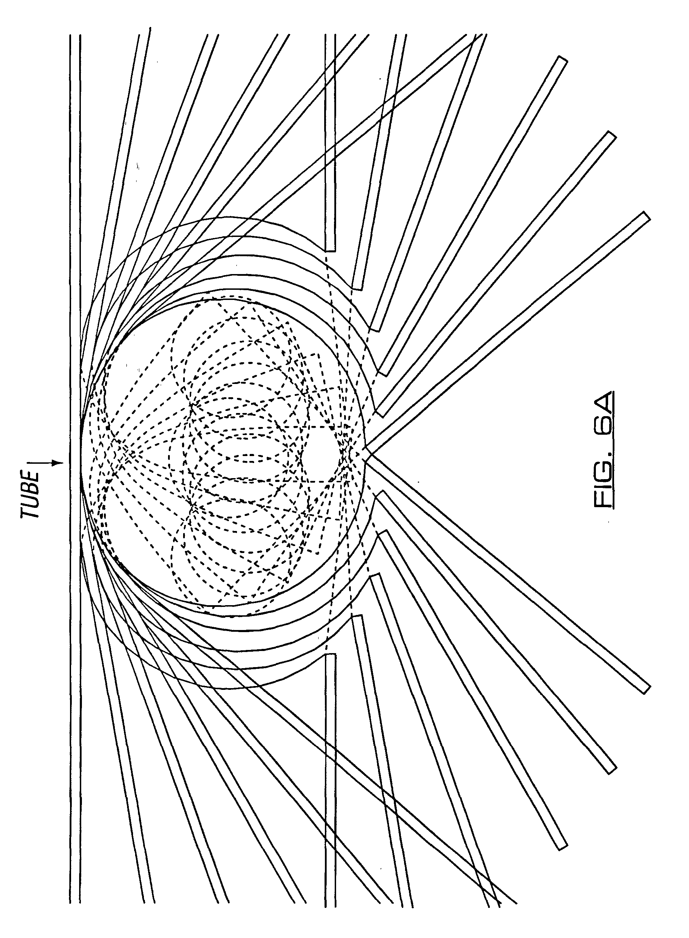

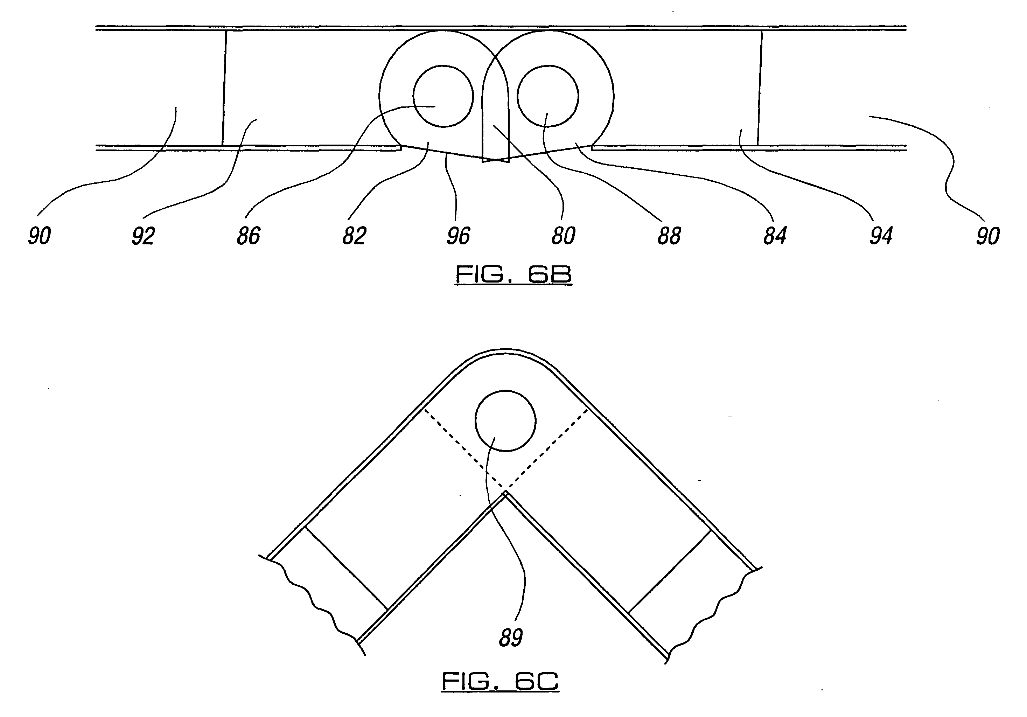

Figures 6A-C illustrate a further form of mechanical joint, with Figures 6B and C illustrating plan views of the mechanical joint in an open position and formed position respectively and figure 6A illustrating the loci of the two part insert 80 formed by parts 82, 84, with apertures 86, 88 respectively. The loci diagram illustrates that the centres of the apertures 86, 88 are offset until they are pinned together and, because of this cannot move or rotate around each other to disengage. Thus, in use, the two parts 82, 84 are engaged in respective parts of the first member 90 by respective engagement means 92, 94 and lie in the opening 96 in the first member. The first member 90 is then progressively bent around as illustrated in Figure 6A to form the position shown in Figure 6C whereupon the two parts 82, 84 of the insert 80 are located such that the apertures 86, 88 overlie one another. A pin or other engagement means 89 can then be placed through the aperture to retain the insert with the second member and hence the mechanical joint in the position shown in Figure 6C.

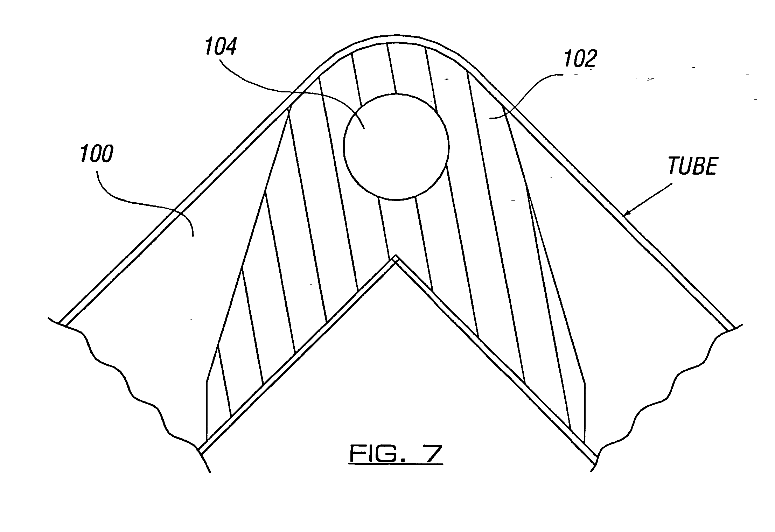

Figure 7 illustrates a further form of mechanical joint, illustrating the same in a formed condition. In this case the first member 100 receives a profiled insert 102 in the open ends of the first member at the opening, prior to forming. The insert has an aperture 104 and once formed a further insert is provided which engages with the first insert when in a formed condition to lock the same in the formed condition and hence form the mechanical joint.

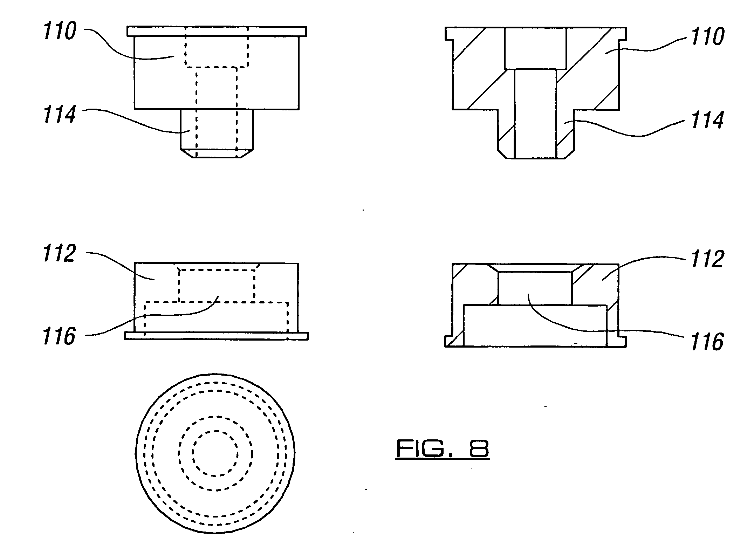

Figure 8 illustrates an embodiment of one form of insert which is formed from two parts 110, 112 shown in elevation and section. The first part 110 is provided to be inserted into the second part 112 as shown via the plug 114 moving into the aperture 116. In this case, the mechanical joint can be formed in accordance with the invention and an insert is formed such as that illustrated in Figure 6A-C. The insert shown in Figure 8 can then be placed into the aperture by placing the parts 110, 112 from opposing sides, into the aperture and engaging the same to complete the joint. This allows the insert to be provided of different material and/or finishes and may also allow the insert to be provided with other engagement formations for other items and the like.

## Claims

1. A mechanical joint for use in the construction of an article, said joint comprising a first member (2) and a second member (16), said first member comprising first and second portions and being provided with at least one opening (6) therebetween defined by first and second edges (8, 10), said opening receiving the second member, or an insert capable of receiving the second member (16), the first and/or second edges of the opening having been moved to engage the second member or insert within the opening and said opening resulting from a removal of material from the first member to leave a band (12) of material at the opening location, **characterised in that** the first member is provided in an initial condition in a substantially straight elongate form and the movement of the first and second edges of the opening is about a pivotal axis located at the opening or adjacent thereto so that the first member, when the joint is formed, has relatively angled first and second portions depending from the joint.

2. A mechanical joint according to claim 1 **characterised in that** the first member is provided with one or more further portions and/or openings formed at spaced intervals and each of said further portions and/or openings is provided for the location of a member or insert.

3. A mechanical joint according to claim 1 **characterised in that** the second member lies in a plane substantially perpendicular to the plane of the longitudinal axis of the first member.

4. A mechanical joint according to claim 1 **characterised in that** the opening extends from one side of the member substantially across the majority of the member to the opposite side leaving the band of material at the opposite side.

5. A mechanical joint according to claim 1 **characterised in that** an insert is located in the opening to form the mechanical joint and has upper and/or lower collar formations (24, 26) which protrude above and/or below the first member.

6. A mechanical joint according to claim 1 **characterised in that** the second member positioned in the opening is a former and is capable of being replaced by an insert which can be held in position.

7. A mechanical joint according to claim 1 **characterised in that** it is part of an item of furniture formed from a series of selectively engaged members, in the sense that at least one of said engagements is made via the mechanical joint.

8. A method of forming a mechanical joint, said method comprising taking a first substantially straight elongate member (2) comprising first and second portions, forming an opening (6) therebetween depending from one side of said member and defined by first and second edges (8, 10), positioning a second member, insert or former (16) in the opening and then moving at least one portion of the first member so as to move the first and second edges (8, 10) towards one another to a degree which is sufficient to prevent the insert or second member from passing through the opening and the opening being formed by removing material from one side of the first member so as to leave a band of material (12) at the opening location, **characterised in that** the movement of the first and second edges of the opening is about a pivotal axis located at the opening or adjacent thereto, so that the first member, when the joint is formed, has relatively angled first and second positions depending from the joint.

9. A method according to claim 8 **characterised in that** the first and second edges are respectively moved so as to substantially close the opening and hence retain the member or insert in position.

10. A method according to claim 8 **characterised in that** the opening is completely closed by the provision of a closing member and/or weld material.

11. A method according to claim 8 **characterised in that** the former is removed by sliding the same out of the opening and replaced by an insert or second member which is positioned to engage in the opening and so engage the first member.

## Patentansprüche

1. Mechanische Verbindung für die Verwendung bei der Konstruktion eines Artikels, wobei die genannte Verbindung Folgendes umfasst: ein erstes Element (2) und ein zweites Element (16), wobei das genannte erste Element einen ersten und einen zweiten Abschnitt umfasst und mit wenigstens einer Öffnung (6) dazwischen versehen ist, die vom ersten und vom zweiten Rand (8, 10) definiert wird, wobei die genannte Öffnung das zweite Element aufnimmt, oder einen Einsatz, der das zweite Element (16) aufnehmen kann, wobei der erste und/oder der zweite Rand der Öffnung bewegt wurden, um in das zweite Element oder den Einsatz in der Öffnung einzugreifen, wobei die genannte Öffnung durch Entfernen von Material von dem ersten Element entstanden ist, um einen Streifen (12) Material am Ort der Öffnung zu belassen, **dadurch gekennzeichnet, dass** das erste Element in einem Anfangszustand in einer im Wesentlichen geraden und länglichen Form vorgesehen ist und die Bewegung des ersten und des zweiten Randes der Öffnung um eine Drehachse erfolgt, die sich an der Öffnung oder daneben befindet, so dass das erste Element beim Formen der Verbindung relativ schräge erste und zweite Abschnitte aufweist, die von der Verbindung herabhängen.

2. Mechanische Verbindung nach Anspruch 1, **dadurch gekennzeichnet, dass** das erste Element mit einem oder mehreren weiteren Abschnitten und/oder Öffnungen versehen ist, die in beabstandeten Intervallen ausgebildet sind, und alle genannten weiteren Abschnitte und/oder Öffnungen zum Positionieren eines Elementes oder Einsatzes vorgesehen sind.

3. Mechanische Verbindung nach Anspruch 1, **dadurch gekennzeichnet, dass** das zweite Element in einer Ebene im Wesentlichen lotrecht zur Ebene der Längsachse des ersten Elementes liegt.

4. Mechanische Verbindung nach Anspruch 1, **dadurch gekennzeichnet, dass** die Öffnung von einer Seite des Elementes im Wesentlichen über den größten Teil des Elementes zur gegenüberliegenden Seite verläuft und den Materialstreifen auf der gegenüberliegenden Seite belässt.

5. Mechanische Verbindung nach Anspruch 1, **dadurch gekennzeichnet, dass** sich ein Einsatz in der Öffnung befindet, um die mechanische Verbindung zu bilden, und obere und/oder untere Kragenformationen (24, 26) hat, die über und/oder unter dem ersten Element vorstehen.

6. Mechanische Verbindung nach Anspruch 1, **dadurch gekennzeichnet, dass** das in der Öffnung positionierte zweite Element eine Formschablone ist, die durch einen Einsatz ersetzt werden kann, der festgehalten werden kann.

7. Mechanische Verbindung nach Anspruch 1, **dadurch gekennzeichnet, dass** sie ein Teil eines Möbelstücks ist, das aus einer Reihe von selektiv im Eingriff befindlichen Elementen gebildet ist, in dem Sinne, dass wenigstens einer der genannten Eingriffe über die mechanische Verbindung erfolgt.

8. Verfahren zum Bilden einer mechanischen Verbindung, wobei das genannte Verfahren die folgenden Schritte umfasst: Nehmen eines ersten, im Wesentlichen geraden, länglichen Elementes (2), das einen ersten und einen zweiten Abschnitt umfasst, Formen einer Öffnung (6) dazwischen, die von einer Seite des genannten Elementes herabhängt und durch den ersten und den zweiten Rand (8, 10) gebildet wird, Positionieren eines/r zweiten Elementes, Einsatzes oder Formschablone (16) in der Öffnung und dann Bewegen von wenigstens einem Abschnitt des ersten Elementes so, dass der erste und der zweite Rand (8, 10) aufeinander zu in einem Ausmaß bewegt werden, das ausreicht, um zu verhindern, dass der Einsatz oder das zweite Element durch die Öffnung passiert, und die Öffnung geformt wird, indem Material von einer Seite des ersten Elementes entfernt wird, um einen Materialstreifen (12) am Ort der Öffnung zu belassen, **dadurch gekennzeichnet, dass** die Bewegung des ersten und des zweiten Randes der Öffnung um eine Drehachse erfolgt, die sich an der Öffnung oder daneben befindet, so dass das erste Element beim Formen der Verbindung relativ schräge erste und zweite Positionen hat, die von der Verbindung herabhängen.

9. Verfahren nach Anspruch 8, **dadurch gekennzeichnet, dass** der erste und der zweite Rand jeweils so bewegt werden, dass sie sich im Wesentlichen nahe an der Öffnung befinden und so das Element oder den Einsatz festhalten.

10. Verfahren nach Anspruch 8, **dadurch gekennzeichnet, dass** die Öffnung durch die Bereitstellung eines Schließelementes und/oder Schweißmaterials völlig geschlossen wird.

11. Verfahren nach Anspruch 8, **dadurch gekennzeichnet, dass** die Formschablone durch Schieben derselben aus der Öffnung entfernt und durch einen Einsatz oder ein zweites Element ersetzt wird, das so positioniert ist, dass es in die Öffnung und somit in das erste Element eingreift.

## Revendications

1. Liaison mécanique à utiliser dans la construction d'un article, ladite liaison comprenant un premier élément (2) et un second élément (16), ledit premier élément comprenant une première et une second parties et étant pourvu, entre les deux, d'au moins une ouverture (6) définie par les premier et second bords (8, 10), ladite ouverture recevant le second élément ou une pièce rapportée capable de recevoir ledit second élément (16), le premier bord et/ou le second bord de l'ouverture ayant été déplacé(s) pour s'engager avec le second élément ou la pièce rapportée à l'intérieur de l'ouverture et ladite ouverture résultant d'un enlèvement de matériau à partir du premier élément en conservant une bande (12) de matériau au niveau de l'ouverture, **caractérisée en ce que** le premier élément revêt, dans un premier temps, une forme allongée sensiblement rectiligne, et le mouvement des premier et second bords de l'ouverture s'effectue autour d'un axe de rotation situé au niveau de l'ouverture ou adjacent à celle-ci de sorte que, lorsque la liaison est formée, le premier élément possède une première et une seconde parties relativement inclinées suspendies sur la liaison.

2. liaison mécanique selon la revendication 1, **caractérisée en ce que** le premier élément est pourvu d'une ou plusieurs autres parties et/ou ouvertures formées à des intervalles espacés, et chacune desdites autres parties et/ou ouvertures est prévue pour la mise en place d'un élément ou d'une pièce rapportée.

3. Liaison mécanique selon la revendication 1, **caractérisée en ce que** le second élément se trouve dans un plan sensiblement perpendiculaire au plan de l'axe longitudinal du premier élément.

4. Liaison mécanique selon la revendication 1, **caractérisée en ce que** l'ouverture s'étend depuis un côté de l'élément, sensiblement en travers de la plus grande partie de l'élément jusqu'au côté opposé, la bande de matériau du côté opposé étant conservée.

5. Liaison mécanique selon la revendication 1, **caractérisée en ce qu'**une pièce rapportée est placée dans l'ouverture pour former la liaison mécanique et est pourvue de formations formant brides (24, 26) supérieures et/ou inférieures, qui font saillie au-dessus et/ou au-dessous du premier élément.

6. Liaison mécanique selon la revendication 1, **caractérisée en ce que** le second élément placé dans l'ouverture est un élément de formage et peut être remplacé par une pièce rapportée qui peut être maintenue en place.

7. Liaison mécanique selon la revendication 1, **caractérisée en ce qu'**elle fait partie d'un article de mobilier formé à partir d'une série d'éléments engagés sélectivement, en ce sens que l'un au moins desdits engagements est réalisé par l'intermédiaire de la liaison mécanique.

8. Procédé de formation d'une liaison mécanique, ledit procédé comprenant les étapes consistant à sélectionner un premier élément allongé sensiblement rectiligne (2) comprenant une première et une seconde parties, à former une ouverture (6) entre ces deux parties suspendues depuis un côté dudit élément, ouverture définie par un premier bord et un second bord (8, 10), à mettre en place dans l'ouverture un second élément, une pièce rapportée ou un élément de formage (16), puis à déplacer au moins une partie du premier élément de sorte à rapprocher l'un de l'autre le premier bord et le second bord (8, 10) jusqu'à une distance suffisamment étroite pour empêcher la pièce rapportée ou le second élément de passer à travers l'ouverture, et l'ouverture étant formée en enlevant du matériau à partir d'un côté du premier élément de sorte à conserver une bande de matériau (12) au niveau de la position de l'ouverture, **caractérisé en ce que** le mouvement du premier bord et du second bord de l'ouverture s'effectue autour d'un axe de rotation situé au niveau de l'ouverture, ou adjacent à celle-ci, de sorte que, lorsque la liaison est formée, le premier élément possède une première et une seconde parties relativement inclinées suspendues sur la liaison.

9. Procédé selon la revendication 8, **caractérisé en ce que** le premier bord et le second bord sont déplacés respectivement de sorte à refermer sensiblement l'ouverture, maintenant ainsi en place l'élément ou la pièce rapportée.

10. Procédé selon la revendication 8, **caractérisé en ce que** l'ouverture est complètement refermée par la mise en place d'un élément de fermeture et/ou d'une matière de soudage.

11. Procédé selon la revendication 8, **caractérisé en ce que** l'élément de formage est déposé en le faisant glisser hors de l'ouverture, et remplacé par une pièce rapportée ou un second élément placé de sorte à s'engager dans l'ouverture et, dès lors, à s'engager avec le premier élément.
